(19) **Europäisches Patentamt**

**European Patent Office**

**Office européen des brevets**

(11) **EP 1 375 166 B1**

(12) **EUROPEAN PATENT SPECIFICATION**

(45) Date of publication and mention
of the grant of the patent:
**18.01.2006 Bulletin 2006/03**

(51) Int Cl.:
***B41J 13/076*** *(2006.01)*

(21) Application number: **03014154.3**

(22) Date of filing: **24.06.2003**

(54) **Recording apparatus**

Aufzeichnungsgerät

Appareil d'enregistrement

(84) Designated Contracting States:
**DE FR GB IT**

(30) Priority: **25.06.2002 JP 2002184470**

(43) Date of publication of application:
**02.01.2004 Bulletin 2004/01**

(73) Proprietor: **CANON KABUSHIKI KAISHA**
**Tokyo (JP)**

(72) Inventor: **Saito, Hiroyuki,**
**c/o Canon K.K.**
**Tokyo (JP)**

(74) Representative: **TBK-Patent**
**Bavariaring 4-6**
**80336 München (DE)**

(56) References cited:
**EP-B- 0 361 922          DE-A- 19 610 466**
**US-A1- 2002 067 941**

**Description**

**Background of the Invention**

**1. Field of the Invention**

This invention relates to a recording apparatus for forming images on a recording medium.

**2. Description of Related Art**

Quality of output images produced by a recording apparatus, particularly an inkjet recording apparatus, is improved significantly, and a higher accuracy is needed to realize this. As a means for improving image quality of a recording apparatus, it is exemplified that an ink discharging amount is reduced to lower particulate feeling of dots of discharged ink as images and that the dot size on the recording medium tends to be smaller. Where the dot becomes smaller, a region where otherwise the dots are overlapped with one another enters in a state not overlapping each other if the dot arrival position is changed even a little (or conversely, a region not to be overlapped becomes overlapped), so that the density and color tone of the region may be shifted. Such shifts in density and color tone render inferior the image quality as of white or black stripe in images or unevenness in color. The positional shifts among the dots here are of a level from several microns to ten and several microns, and means for ensuring this accuracy has been used.

With respect to conveyance mechanisms for a recording medium as one of important mechanisms for image formation, drive structures or the like have been proposed and used for keeping an assembly accuracy as a structure canceling stop errors of a motor or eccentric accuracy components of gears by rendering the level of the parts highly accurate, e.g., improving eccentricity, cylindrical degrees, and diameter allowable deviations of conveyance rollers and classes of the gears and by rendering the conveyance amount coinciding to rotation integer components of the motor and the gears. A method, in addition to the accuracy consideration of an ideal rotary amount (conveyance surface moving amount) of the conveyance roller, is also used in which micro protrusions are formed on an outer peripheral surface of bearings to stabilize the position of the bearings for supporting the conveyance roller for the purpose of prevention of positional shifts of the conveyance roller itself and in which any deviation between the bearing of the conveyance roller and the chassis otherwise generated on an allowance is eliminated by inserting the bearing as grinding those protrusions when the bearing is attached to the chassis.

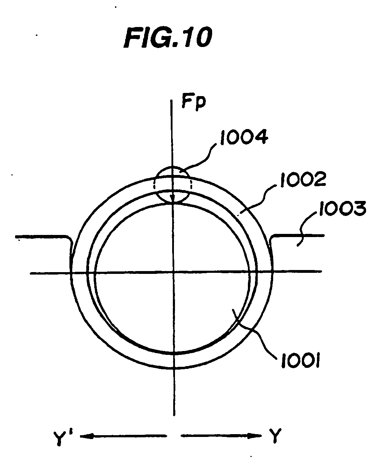

With such a conventional means, however, though the accuracy in the ideal rotary amount (conveyance surface moving amount) of the conveyance roller is adequately considered, a solution regarding the position of the conveyance roller is inadequate. Fig. 10 shows a bearing structure for a general conveyance roller. In Fig. 10, numeral 1001 denotes a conveyance roller; numeral 1002 denotes a bearing; numeral 1003 denotes a chassis supporting the bearing; numeral 1004 denotes a pinch roller. The pinch roller 1004 is pushed to the conveyance roller 1001 with force Fp from a spring, not shown, to produce conveyance force of recording media.

The conveyance roller 1001 is structured as to move easily in Y, Y' directions on an inner circumference of the bearing 1002 because the cross section of the conveyance roller 1001, the bearing 1003, the chassis 1003, as well are in a circular shape, respectively, even where positional deviations between the conveyance roller 1001 and the bearing 1002 and between the bearing 1002 and the chassis 1003 are accumulated together in a lower direction in Fig. 10 by pushing force Fp from the pinch roller 1004, and the bearing 1002 is also structured as to easily move in the Y, Y' directions where the relation between the chassis 1003 and the bearing 1002 is the same as the above, so that the conveyance roller 1001 easily moves upon exertion of external force from external disturbances and so that the position of the conveyance roller 1001 is statically unstable with respect to the chassis 1003.

In the above described method, as a conventional art, in which micro protrusions are formed on the outer peripheral surface of the bearing and in which the bearing 1002 is inserted as these protrusions are ground when the bearing 1002 is attached to the chassis, though positional deviations are eliminated when the bearing 102 is inserted, the protrusions have to be easily ground, namely to be weak protrusions, because the protrusions are necessarily of a degree not to deform the inner diameter of the bearing during insertion of the bearing, so that the protrusions may be deformed due to fallings during transportations or vibrations, thereby creating positional deviations. In general, there are differences in thermal expansion property among the bearing made of a resin such as POM or the like, and the chassis and the conveyance roller shaft, which are made of a metal, so that problems are raised such that the size may vary from changes in temperature and thereby positional deviations may occur.

**Summary of the Invention**

It is an object of the invention to provide a recording apparatus preventing a recording medium from moving caused from movement of a conveyance roller by stabilizing the position of the conveyance roller and a bearing without any cost increase as well as improving accuracy of arrival positions of ink droplets.

To accomplish the above object, a representative structure according to the invention includes, in a recording apparatus the features defined in claim 1.

In this invention, because a recording apparatus includes the features defined in claim 1, a recording medium can be prevented from moving caused from movement of a conveyance roller by stabilizing the position of the conveyance roller and a bearing without any cost increase, and accuracy of arrival positions of ink droplets can be improved.

**Brief Description of the Drawings**

Fig. 1 is a perspective view showing an inkjet printer according to the first embodiment of the invention;

Fig. 2 is a structural diagram showing a conveyance roller and a bearing according to the first embodiment of the invention;

Fig. 3 is an illustration showing force exerting to the conveyance roller and the bearing according to the first embodiment of the invention;

Fig. 4 is an illustration showing the conveyance roller's force exerting to the bearing at respective states during driving according to the first embodiment of the invention;

Fig. 5 is a relation diagram between the contact portion of the bearing and bearing exerting force according to the first embodiment of the invention;

Fig. 6 is a schematic view showing a shape of the bearing according to the first embodiment of the invention;

Fig. 7 is a structural diagram showing a conveyance roller and a vicinity of a bearing according to the second embodiment of the invention as well as an illustration showing exerting force;

Fig. 8 is a schematic view showing a shape of a chassis according to the second embodiment of the invention;

Fig. 9 is a structural diagram showing a conveyance roller and a vicinity of a bearing according to the third embodiment of the invention; and

Fig. 10 is a structural diagram showing a conveyance roller and a vicinity of a bearing of a prior art.

**Detailed Description of the Preferred Embodiments**

[First Embodiment]

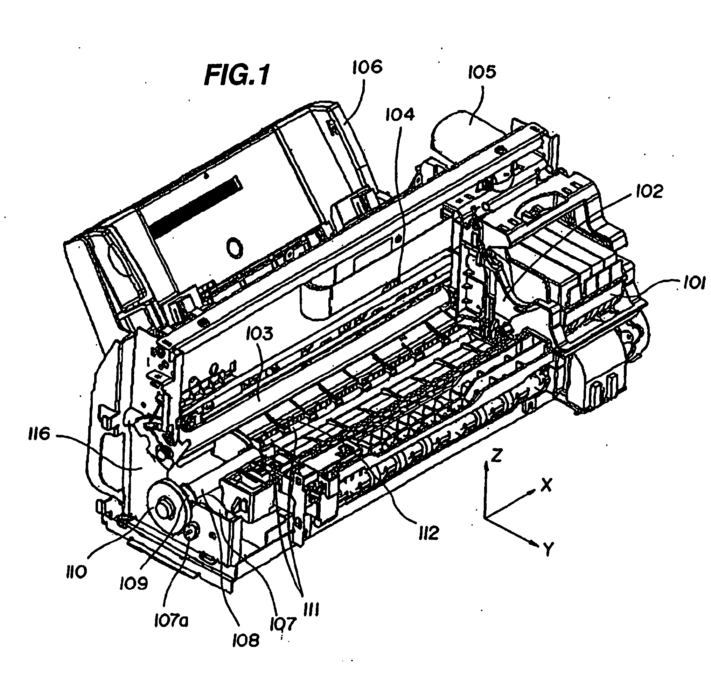

Now, the first embodiment is described. In this embodiment, exemplified is a serial type inkjet printer on which a recording head as a recording means with a detachable ink tank is mounted. Fig. 1 is a whole diagram showing the serial type inkjet printer. In Fig. 1, numeral 101 is a recording head having an ink tank; numeral 102 is a carriage mounting the recording head thereon. A guide shaft 103 is inserted at a bearing portion of the carriage 102 in a state capable of sliding in a main scanning direction perpendicular to the conveyance direction of a recording medium 301, and each end of the shaft is secured to a chassis 116. Drive force of a drive motor 105 serving as a carriage driving means is transmitted to the carriage 102 via a belt 104 serving as carriage drive transmitting means engaged thereto, and thereby the carriage 102 is movable in the main scanning direction (X direction).

In Fig. 1, numeral 106 is a feeding base for stacking the recording media; numeral 107 is a conveyance motor as a drive source for conveyance of the recording media; numeral 108 is a conveyance roller for conveying the recording media (in this embodiment, the conveyance surface of the conveyance roller for the recording media and the bearing supporting portion are considered to have the same diameter, and hereinafter, the conveyance roller and the conveyance roller shaft as spindle (supporting axis) of a conveyance roller are dealt as the same meaning.); numeral 109 is a bearing for supporting a shaft of the conveyance roller 108 at the opposite ends of the conveyance roller 108 and is attached to the chassis 116; numeral 110 is a conveyance roller gear for transmitting the drive force of the conveyance motor 107 and is attached to the conveyance roller 108; numeral 111 is a pinch roller for pressing the recording media to the conveyance roller 108; numeral 112 is a pinch roller spring serving as pressing means for pressing the pinch roller.

The recording media during waiting time for printing are stacked on the feeding base 106, and the recording media are fed at the beginning of the printing operation by a feeding roller, not shown. The recording media thus fed are conveyed by a proper feeding amount in a conveyance direction of Y upon rotation of the conveyance roller 108 from the drive of the conveyance motor 107 for the recording media. Images are thus formed by discharging ink or inks to the recording media from the recording head 101 during scanning operation of the carriage 102. The media are delivered by the delivering means after images are formed, and recording operation is completed.

In this embodiment, as an ink discharging structure, it is structured to energize an electro-thermal converter in response to a recording signal to make recording by discharging the inks from orifices upon growth and contraction of bubbles generated in the inks in utilizing film boiling generated in the inks from the thermal energy thereof. As a representative structure and the principle, it is preferable to used a fundamental principle disclosed in U.S.Pat. Nos. 4,723,129, and 4,740,796. This method is applicable to any of, so-called, on-demand type and continuous type, but particularly, upon applying at least one drive signal providing rapid temperature increase exceeding nucleus boiling and corresponding to the recording information to the electro-thermal converter disposed as to correspond to a sheet to which a fluid (ink) is held or to a fluid route, and thereby generating thermal energy at the electro-thermal converter to generate a film boiling at a thermal operative surface of the recording head, the on-demand type is effective because bubbles can be consequently formed in a fluid corresponding, one to one basis, to the drive signal. With growth and contraction of the bubbles, the fluid is discharged out of discharging openings, and at least one droplet is formed. If the drive signal is formed as a pulse shape, the growth and contraction of the bubbles can be done instantly, so that the fluid can be discharged excellently, and therefore it is preferable.

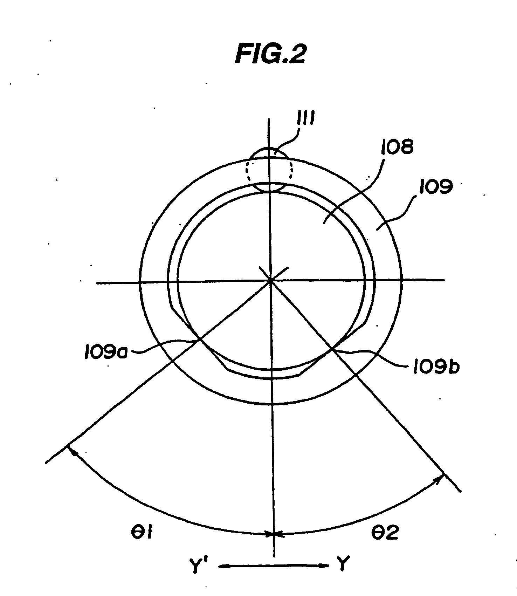

Fig. 2 shows a structure of the conveyance roller 108 and the bearing 109. Pushing force of the pinch roller 111 is here exerted to the conveyance roller 108 by elastic force of the pinch roller spring 112. On the other hand, the bearing 109 has two surfaces supporting the conveyance roller 108, and therefore, tangents (contact points when seen in the cross section) 109a, 109b exist between the two surfaces and the conveyance roller 108. With this structure, the conveyance roller 108 is supported only to the two portions defined geometrically of the bearing 109, and because the conveyance roller 108 is positionally set by the tangents 109a, 109b in the conveyance direction (Y, Y' direction in Fig. 2), the conveyance roller 108 does not move positionally in the conveyance direction (Y, Y' direction in Fig. 2) as far as the conveyance roller 108 does not float from the bearing 109. The bearing 109 is fastened to the chassis 116 with a rotary limiting portion, not show, and does not move pivotally with respect to the chassis 116. It is to be noted that assembling property can be improved by proving an opening capable of inserting in a radial direction the conveyance roller 108 with respect to the bearing 109 or the bearing 109 with respect to the chassis 116. The two surfaces supporting the conveyance roller 108 can be any shape, but a plane is preferable.

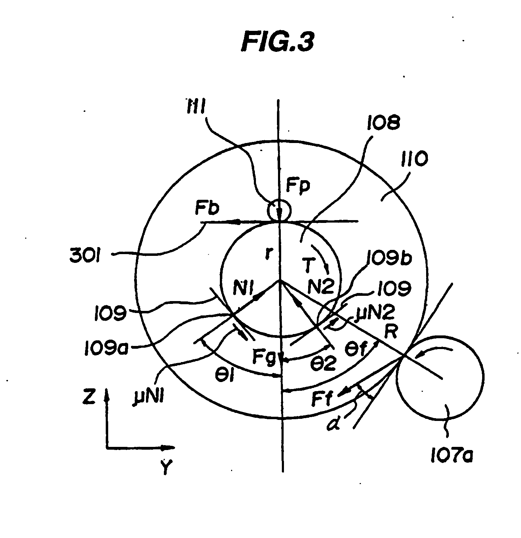

Fig. 3 shows an illustration showing forces exerting to the conveyance roller 108 and the bearing 109. The meanings of signs in Fig. 3 are as follows:

Fp: pushing force of the pinch roller
Fb: conveyance resistance force
Ff: conveyance roller drive force
Fg: gravity force of the conveyance roller
N1, N2: opposing force of the bearing (vertical opposing force)
$\mu$ N 1, $\mu$ N 2 : frictional force between the conveyance roller shaft and the bearing
$\theta$f: positional angle of the drive gear
$\theta$1, 62: contact positional angle with respect to the conveyance roller and the bearing
$\alpha$: pressure angle of the drive gear
R: radius of the conveyance roller gear
r: radius of the conveyance roller
T: acceleration torque of a rotary body in relation to the conveyance roller

In Fig. 3, numeral 107a is an output gear (conveyance motor gear) for conveyance motor and engages with a conveyance roller gear 110 at a position shifted with angle $\theta$f with respect to a perpendicularly lower direction of the conveyance roller gear 110. The gear 107a is a drive transmitting means for driving the conveyance roller 108, and transmits force Ff rotating the conveyance roller gear 110. Generally, in a case of gear transmission, drive force Ff exerts in a direction shifted by pressure angle $\alpha$ from the common tangent direction of the conveyance motor gear 107a and the conveyance roller gear 110. Pushing force Fp of the pinch roller 111 from the elastic force of the pinch roller spring 112 is exerted to the conveyance roller 108 in a perpendicularly lower direction.

The recording medium 301 to be conveyed is sandwiched between the conveyance roller 108 and the pinch roller 111. Conveyance resistance such as rigidity of the recording medium is exerted to the recording medium 301 to be conveyed in a direction of conveyance upstream or downstream, and conveyance resistance force Fb dealt as a resultant force with a rolling friction of the pinch roller 111 is exerted to the conveyance roller 108 in a direction opposite to the conveyance direction (right direction in Fig. 3). This conveyance resistance force Fb is frictional resistance occurring when the conveyance roller 108 is moving or when force to move is exerted. The outer peripheral surface of the conveyance roller 108 (the conveyance roller shaft) is supported to contact at the two contact portions 109a, 109b at the bearing, and opposing forces N1, N2 of the force supporting the conveyance roller 108 are exerted in a center direction of the conveyance roller 108 at the contact portions 109a, 109b.

The contact portions 109a, 109b are respectively in contact with the conveyance roller 108 at positions of angles61, $\theta$2 from the perpendicularly lower direction. At the contact portions 109a, 109b, frictional resistances in a tangent direction opposed to the rotation direction of the conveyance roller 108 are exerted with forces $\mu$ N 1, $\mu$ N 2 (providing that frictional resistance $\mu$ between the conveyance roller 108 and the bearing 109).

When the conveyance roller 108 is accelerated or decelerated, the acceleration torque $T = Id\omega/dt$ (I denotes inertia of the rotary body (moment of inertia); $\omega$ denotes an angular velocity of the rotary body) of the rotary body in association with the conveyance roller 108 is exerted.

Herein, where:

$$A = \sin \theta 1 + \mu \cos \theta 1,$$

$$B = \cdot \sin \theta 2 + \mu \cos \theta 2,$$

$$C = \cos \theta 1 \cdot \mu \sin \theta 1,$$

$$D = \cos \theta 2 + \mu \sin \theta 2,$$

$$E = Fb + Ff \cos (\theta f - \alpha)$$

$$F = Fg + Fp + Ff \sin (\theta f - \alpha),$$

vertical opposing forces that the bearing 109 receives are denoted as:

$$N1 = (DE \cdot BF) / (AD \cdot BC),$$

$$N2 = (AF \cdot CE) / (AD \cdot BC)$$

Furthermore, where:

$$G = (\sin \theta 1 + \mu \cos \theta 1)N1 - (\sin \theta 2 \cdot \mu \cos \theta 2)N2,$$

$$H = (\cos \theta 1 \cdot \mu \sin \theta 1)N1 + (\cos \theta 2 + \mu \sin \theta 2)N2,$$

force Fv (scalar) that the conveyance roller 108 exerts to the bearing 109 is:

$$Fv \text{ (scalar)} = \sqrt{(G^2 + H^2)},$$

and the exertion angle $\theta v$ is:

$$\theta v = \tan^{-1} (G/H),$$

at that time, acceleration torque T is denoted as:

$$T = RFf \cos \alpha - rFb - r \mu (N1 + N2)$$

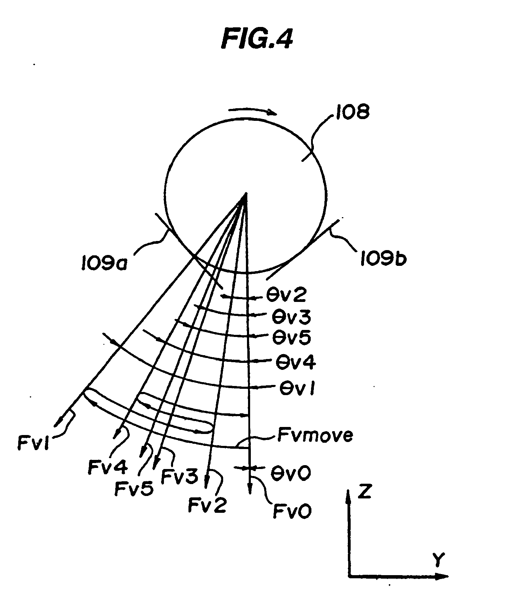

Hereinafter, referring to Fig. 4, force Fv (vector) that the conveyance roller 108 exerts to the bearing 109 while the conveyance roller 108 is in a state of stopping (without drive force), starting up, accelerating, moving at a constant rate, decelerating, immediately before stopping, is described.

Where: Fv during stopping is Fv0; T is T0; drive force Ff is Ff0, it is set as Ff0=0, Fb=0, $\mu$N1=0, $\mu$N2=0, T0=0, and Fv0 becomes a vector directing perpendicularly downward (θv = 0).

Where: force Fv exerting to the bearing 109 during starting up is Fv1; acceleration torque T is T1; drive force Ff is Ff1, it is set as $\mu$ = static frictional coefficient and Fb is the maximum static frictional force, and Fv1 becomes a vector extending in a direction inclined by angle θv1 from the perpendicularly downward direction in association with the drive force Ff1 at which T1 = 0.

Where the force Fv exerting to the bearing 109 during acceleration is Fv2; acceleration torque T is T2; drive force Ff is Ff2, it is set as $\mu$ = dynamic frictional coefficient and Fb is the dynamic frictional force, and Fv2 becomes a vector extending in a direction inclined by angle θv2 from the perpendicularly downward direction in association with the drive force Ff2 at which T2 > 0. The magnitude and direction of this vector is changeable according to the drive force Ff2 (or according to T2).

Where the force Fv exerting to the bearing 109 during moving at a fixed rate is Fv3; acceleration torque T is T3; drive force Ff is Ff3, it is set as $\mu$ = dynamic frictional coefficient and Fb is the dynamic frictional force, and Fv3 becomes a vector extending in a direction inclined by angle θv3 from the perpendicularly downward direction in association with the drive force Ff2 at which T3 = 0.

Where the force Fv exerting to the bearing 109 during deceleration is Fv4; acceleration torque T is T4; drive force Ff is Ff4, it is set as $\mu$ = dynamic frictional coefficient and Fb is the dynamic frictional force, and Fv4 becomes a vector extending in a direction inclined by angle 6v4 from the perpendicularly downward direction in association with the drive force Ff4 at which T4 < 0. The magnitude and direction of this vector is changeable according to the drive force Ff4 (or according to T4).

Where the force Fv exerting to the bearing 109 at a time immediately before stopping is Fv5; acceleration torque T is T5; drive force Ff is Ff5, it is set as $\mu$ = dynamic frictional coefficient and Fb is the dynamic frictional force, and Fv5 becomes a vector extending in a direction inclined by angle θv5 from the perpendicularly downward direction in association with the drive force Ff5 at which T5 < 0.

To reduce impacts at stop, the acceleration torque T5 is generally set to be a value close to zero at the time immediately before stopping (T5 > T4). To prevent gears from backlashing from a viewpoint to gear transmission accuracy, it is preferable that the drive gear reduces its rate always as pushing the conveyance gear during deceleration, and generally the drive forces of Ff4 > 0, Ff5 > 0 are set.

Therefore, a relationship of θv5 >θv4 >θv3 >θv2 >θv1 >θv0 is satisfied in a setting of acceleration during general acceleration and deceleration period, from relations of static frictional coefficient > dynamic frictional coefficient, T2 > T1= T3 > T5 > T4, Ff4 > 0, and Ff5 > 0. According to this relation, the starting up vector Fv1 and the stopping vector Fv0, existing at both most extremes, are preferably stabilized to render the conveyance roller 108 get settled at a stable position during operation inclusive the stopping state.

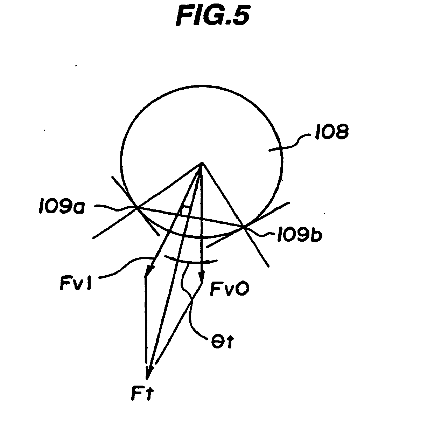

As shown in Fig. 5, where the combined vector of vectors Fv1 and Fv0 is set as Ft, Ft becomes a vector extending in a direction inclined by angle θt from the perpendicularly downward direction. The contact portions 109a, 109b for the conveyance roller 108 and the bearing 109 are formed at positions in symmetry with respect to a direction of angle θt of the vector Ft (namely, the contact positional angles θ1, θ2 are determined so that the angle θt direction of the vector Ft and the vertical direction of the line segment coupling between the two contact positions 109a, 109b coincides to each other.). Because Ft and θ1, Ft and θ2 are in a depending relation to each other, the conveyance roller 108 can be made stable at a fixed position during operation including the stopping state where θ1 and θ2 are decided as to satisfy the above contents.

According to this structure , the conveyance roller 108 is pushed to the stable positions of the contact portions (supporting surfaces) 109a, 109b for the bearing to eliminate a loosened space, so that the position of the conveyance roller 108 is merely changed not more than a negligible amount even where temperature changes cause the size changes of the conveyance roller 108 and the bearing 109, and so that the positional accuracy of the conveyance roller 108 is ensured not depending on the circumstances because no loosened situation occurs. Furthermore, addition of parts may be unnecessary, and it can be realized without further costs.

To determine the contact positional angles θ1, θ2, the vertical opposition forces N1, N2 produced at the bearing 109, other than above, are necessarily of positive values (because the conveyance roller may float from the bearing if they are of negative values), and such positive values having some margins are surely selected from a viewpoint to ensure the stability against external disturbances. On the other hand, in consideration of friction and an angle (180-θ1-θ2) between the contract positions 109a, 109b of the bearing 109, the contact positional angles are designed (if the angle becomes smaller, the stability is increased but it is disadvantageous for friction.).

Herein, the contact positions 109a, 109b of the bearing 109 are determined based on merely a resultant vector direction (θt direction) of the vectors Fv1, Fv0 as a symmetric axis. In conveyance operation, however, since stopping accuracy is the most important factor, the weight to Fv0 may be made larger with respect to Fv1 to improve the stability in a stopping state, thereby producing a resultant vector Ft having a direction closer to the Fv0 side, and thereby determining the contact positional angles θ1, θ2.

In a case where the angle difference between the angles θv1, θv0 is too large to satisfy the condition for determining the contact positional angles θ1, θ2 as described above, in respecting most importantly the stability on a phenomenon (operation) close to stoppage, the contact positions 109a, 109b of the bearing 109 are determined based on a resultant vector direction (θt direction) of, at least, the vector Fv5 exerting to the bearing 109 at a time immediately before stopping and the exerting vector Fv0 in a stopping state, as a symmetric axis. If the condition is permissive, Fv5 and the Fv1 direction is made closer to Fv4 and the determined target vector, respectively, thereby preferably improving the stability of the conveyance roller 108 during the operation. The contact positions 109a, 109b of the bearing 109 can also be determined closer to the exerting vector direction in the stopping state in those cases.

In this embodiment, the vector Fv0 during stopping with respect to the vector Fv1 exerting to the bearing 109 at a time of the maximum acceleration is the vector most deviated in a positive direction ofY in Fig. 4. In a case where the vector Fv4 and the vector Fv2 are the vector most deviated in a direction toward the negative direction ofY with respect to the vector Fv1 and toward the positive direction ofY with respect to the vector Fv0 respectively where the acceleration is large during the accelerating and decelerating periods from the reason for improvements in through-put or the like, however, the contact positions 109a, 109b of the bearing 109 are easily introduced by replacing the vectors Fv1, Fv0 used for determining the contact positional angles θ1, θ2 for the bearing, as described above, with the vector Fv4 and the vector Fv2, respectively. With a conventional bearing having an annular cross section, since the conveyance roller 108 moves greatly, and since the acceleration is large during the accelerating and decelerating periods, introduction of the contact positions 109a, 109b of the bearing 109 as described above can improve the stability of the conveyance roller 108.

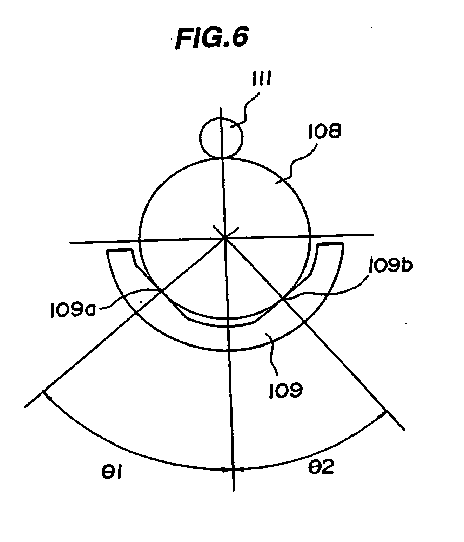

Although in this embodiment the bearing 109 has the two surfaces supporting the conveyance roller 108 as shown in Fig. 2 and is formed in a shape covering the peripheral surface of the conveyance roller 108, the bearing 109 is not limited to such a shape. For example, because the portion functioning as a bearing is only two conveyance roller supporting portions 109a, 109b, it is allowable if the rigidity and the shape of the two conveyance roller supporting portions 109a, 109b are maintained, and as shown in Fig. 6, the bearing 109 can be formed as not to cover the top of the conveyance roller 108. With such a bearing shape, assembling can be done by placing the conveyance roller 108 on the bearing 109, so that the apparatus can enjoy merits on reduction of assembling costs and improvement on maintenance property.

Although in this embodiment the pushing direction of the pinch roller 111 coincides to the gravity direction, it is not necessary to render these coincide to one another. This invention is easily applicable only by changing the direction of the exerting force vector caused from the pushing direction of the pinch roller 111 even where the pushing direction is inclined for the purpose for pushing the recording medium to a platen serving as a printing facing portion located on a conveyance downstream side, and this does not fall out of the scope of this invention.

With respect to drive transmission, although in this embodiment the conveyance roller gear 110 receives only drive from the conveyance motor gear 107a, this invention is easily applicable merely where the conveyance roller gear 110 also serves as a transmitting means for transmitting drive to the delivery roller as well as the feeding means and merely where a load force vector (torque) exerts additionally even where a gear transmitting means is coupled as a load. With respect to drive transmission method, although the method is the gear transmission in this invention, but this invention is not limited to this, and is applicable to a belt transmission or friction transmission. In such a case, this invention is applicable easily onto a formula where the pressure angle α is changed corresponding to the transmission method or tension force of the belt is added. Although in this embodiment, the conveyance mechanism made of the conveyance roller 108 and the pinch roller 111 is described, this invention is easily applicable to a bearing structure for a conveyance mechanism made of the conveyance roller 108 (delivery roller) and spurs where the spurs are used in lieu of the pinch roller 111. It is to be noted that the spur is a rotary body having small contact areas to the recording medium and not messing an ink image even where contacting to a surface side on which an ink image is recorded by ink discharge. In this embodiment, it is to be noted that the conveyance surface of the conveyance roller for the recording media and the bearing supporting portion are considered to have the same diameter, but a thinner (having smaller diameter) conveyance roller shaft than the conveyance roller 108 can be used.

[Second Embodiment]

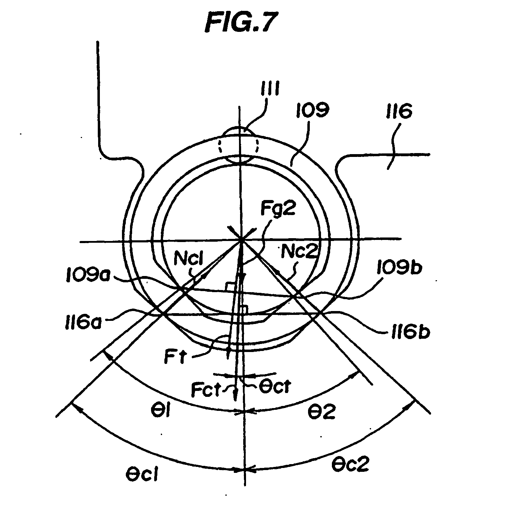

Fig. 7 is a structural diagram of a conveyance roller shaft and a vicinity of a bearing showing features in the second embodiment of the invention as well as an illustration showing exerting force. The reference numbers and the signs as in the first embodiment indicate substantially the same meanings. In Fig. 7, in substantially the same manner, the conveyance roller 108 is supported at the shaft thereof to the two faces of the contact portions 109a, 109b of the bearing 109. In addition, in this embodiment, the relation between the bearing 109 and the chassis 1116 is, in substantially the same manner as above, such that the bearing 109 is supported at the shaft thereof to the two faces of contact portions 116a, 116b of the chassis 116, thereby eliminating loosened states between the bearing 109 and the chassis 116, and supporting the bearing 109 stably at a constant position with respect to the chassis 116.

The signs in Fig. 7 have the meanings as follows:

Ft: force that the conveyance roller 108 exerts to the bearing 109 (Ft is an exerting vector sought from the vectors Fv0 to Fv1 exerting to the bearing 109 during each operation during the drive of the conveyance roller sought in the first embodiment);

Fg2: weight of the bearing 109 (perpendicularly downward);

Nc1, Nc2: opposing force of the chassis 116;

Fct: for that the bearing 109 exerts to the chassis 116 (a resultant force of the force that the bearing 109 exerts to the chassis 116 and the gravity of the bearing 109);

θct: vector direction angle;

θc1, θc2: contact positional angles between the conveyance roller 108 and the chassis 116.

The combined force of Nc1 and Nc2 is balanced with Fct as the combined vector of Ft and Fg2. Angles θc1, θc2 are determined from this vector Fct with the vector direction (θct) as a symmetric axis. More specifically, the contact positional angles θc1, θc2 are determined so as to render the angle θct direction of the vector Fct coincide to a direction of vertically equally dividing line of the line segment coupling the two contact positions 116a, 116b. No restriction exists about the angle of the contact positions 116a, 116b of the chassis 116 in consideration of friction because the bearing 109 does not move rotationally at a space to the chassis 116, but the angle is set largely to an extent not to render the bearing 109 bite the chassis 116 due to external force or not to render positional shafts or deformation of the bearing 109 occur.

With this structure, during the stop and drive period of the conveyance roller 108, loosened states not only between the conveyance roller 108 and the bearing 109 but also between the bearing 109 and the chassis 116, can be eliminated, thereby ensuring the positional accuracy of the conveyance roller 108 with respect to the chassis 116, and thereby improving further the conveyance accuracy. It is to be noted that in respect to the positional accuracy between the chassis 116 and the bearing 109 in this embodiment, in substantially the same manner as the first embodiment, it is effective to use determining methods giving the priority to the stopping state, applying Ft, Fct with weights, and shifting toward the exerting force vector at the stop state.

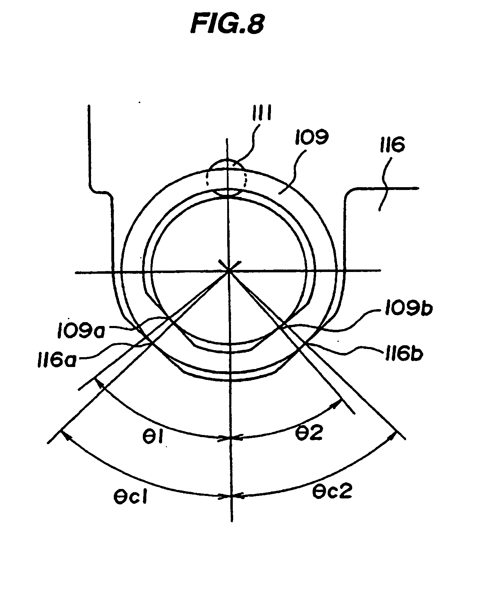

Although in substantially the same manner as in the first embodiment the chassis 116 in this embodiment has the two surfaces supporting the bearing 109 as shown in Fig. 7 and has a shape in a letter of C orienting upward whose top is opened, a portion covering the top of the bearing 109 is not necessary because the portion functioning as a position Setter for the bearing 109 is only the two supporting surfaces for bearing. For example, where the chassis 116 is made in a chassis shape as shown in Fig. 8, the apparatus can enjoy some merits such as reduction of assembling costs and improvement on maintenance property because assembling can be made only by placing the bearing 109 on the chassis 116.

[Third Embodiment]

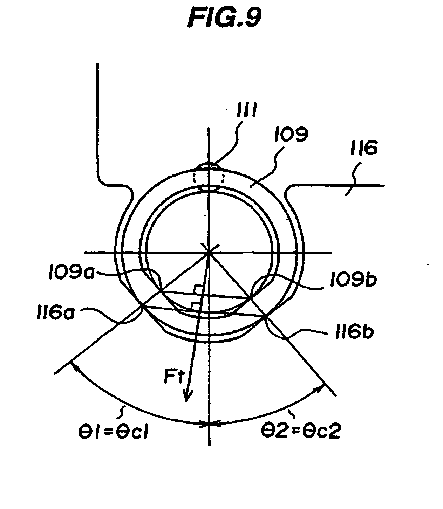

In regarding the third embodiment of the invention, Fig. 9 shows a structural diagram showing a conveyance roller shaft and the vicinity of a bearing. The reference numbers and the signs as in the first, second embodiments indicate substantially the same meanings. In the third embodiment, the contact positional angles θc1, θc2 between the bearing 109 and the chassis 116 are set as equal to the contact positional angles θ1, θ2 between the conveyance roller 108 and the bearing 109 sought in the first embodiment. That is, the contact portions 109a, 109b for bearing and the contact portions 106a, 106b for the chassis 116 are set as located on the same line passing the center of the conveyance roller 118. Actually, because in general the mass of the bearing 109 is adequately small in comparison with the mass of the conveyance roller 108, the influence of the gravity Fg2 of the bearing 109 is negligible.

Because with this structure the exerting force that the bearing 108 receives from the conveyance roller 108 operates to the chassis 116 with the same angle, contraction load only exerts to the bearing 109. Therefore, in a case that the bearing 109 is easily subject to load deformation or creep deformation, there are merits that deformation hardly occurs because of exertion of only the contraction load, and the apparatus can prevent the positions of the bearing 109 and the contact positions between the bearing 109 and the conveyance roller 108 due to deformation of the bearing 109 from changing. This structure therefore ensure the positional accuracy of the conveyance roller 108 with respect to external force and the chassis 116 during preservation, thereby improving further the conveyance accuracy.

[Other embodiments]

In the above described embodiments, though a recording means of a serial type is used for description, such as a recording head secured to a carriage, a replaceable recording head of a chip type, upon an attachment to the carriage, in which ink can be supplied from an apparatus body and in which electrical connection can be made with the apparatus body, and a recording head of a cartridge type in which an ink tank is formed in a united body with the recording head, can be used.

In addition, although in the above embodiment, the ink is described as a fluid, but can be an ink solidified at the room temperature or below as well as softened or fluidified at the room temperature, and be an ink fluidified at a time of application of recording signals in use because in the inkjet recording method it is general to control the temperature so that the ink's viscosity is set in a stably discharging range upon temperature adjustment of the ink itself in a range no less than 30°C and no more than 70°C. Furthermore, this invention is applicable in a case that an ink is used having property that fluidified first by thermal energy such that fluid ink is discharged where ink is fluidified upon application of thermal energy in response to recording signals, where increased temperature by thermal energy is positively prevented by use of energy for phase change from the solid state to the fluid state in the ink, or where an ink solidified in a released state is used for the purpose of prevention of ink evaporation, or in any event, and that beginning to solidify already at a time reaching the recording sheet.

As a feature of the inkjet recording apparatus as described above, apparatuses used as image output terminal apparatuses of information processing apparatuses such as computers or the like, photocopiers in combination of a reader or the like, facsimile machines having transmitting and receiving functions, can be used.

It is to be noted that although described is an example using the inkjet recording method as a recording means as above, this invention's recording method is not limited to the inkjet recording method, and this invention is applicable to recording methods such as thermal transfer recording method, thermal sensing recording method, impact recording methods such as wire-dot recording methods, and any other recording methods. This invention is not necessarily limited to the serial recording method, and a so-called line recording method can be used for the invention.

The present invention relates to a recording apparatus comprising a conveyance roller; a driven roller rotating as driven from the conveyance roller; pushing means for pushing the driven roller to the conveyance roller; a bearing for supporting the conveyance roller; driving means for rotating the conveyance roller; and drive transmitting means. The bearing includes two contact portions with the circumference of a spindle for supporting the conveyance roller and the bearing supports the conveyance roller as to locate a perpendicular direction of a line coupling the two contact portions within a varying range of a vector direction of exertion force exerted to the bearing at a time of stop and operation of the conveyance roller.

**Claims**

1.  A recording apparatus, comprising:

    a conveyance roller (108);
    a driven roller (111) rotating as driven from the conveyance roller (108);
    pressing means (112) for pressing the driven roller (111) to the conveyance roller (108);
    a bearing (109) for supporting the conveyance roller (108);
    a chassis (116) for supporting the bearing (109); and
    driving means (107, 107, 110) for rotating the conveyance roller (108),

    **characterized in that**
    the bearing (109) includes a pair of contact portions (109a, 109b) in contact with the circumference of the conveyance roller (108) for supporting the conveyance roller (108), wherein the positions of the contact portions (109a, 109b) are determined such that a direction perpendicular to a line segment connecting the contact portions (109a, 109b) is within a range of vector directions (θv) of the exertion force (Fv) that the conveyance roller (108) exerts to the bearing (109) at a time of stop and operation of the conveyance roller (108).

2.  A recording apparatus according to claim 1, wherein the chassis (116) includes a pair of contact portions (116a, 116b) contacting with the circumference of the bearing (109) for supporting the bearing (109), wherein the positions of the contact portions (116a, 116b) of the chassis (116) are determined such that a direction perpendicular to a line segment connecting the contact portions (116a, 116b) of the chassis (116) is within a range of vector directions ($\theta v$) of an exertion force (Fv) the conveyance roller (108) exerts to the bearing (109) at a time of stop and operation of the conveyance roller (108).

3. A recording apparatus according to claim 1 or 2, wherein the direction perpendicular to the line segment connecting the respective pair of contact portions (109a, 109b; 116a, 116b) coincides to a combined vector direction ($\theta t$) of the two vectors (Fv0, Fv1) existing at each extreme in the varying range of the vector direction ($\theta v$) of the exertion force (Fv) or is located closer to the vector direction ($\theta v0$) of the exertion force (Fv0) at the time of stop of the conveyance roller (108) than the combined vector direction ($\theta t$).

4. A recording apparatus according to any one of claims 1 to 3, wherein the conveyance roller (108) has a spindle and the contact portions (109a, 109b) of the bearing (109) support the circumference of the spindle.

5. A recording apparatus according to claim 4, wherein the diameter of the spindle equals to the diameter of the conveyance roller (108).

6. A recording apparatus according to claim 4, wherein the diameter of the spindle is smaller than the diameter of the conveyance roller (108).

7. A recording apparatus according to any one of claims 4 to 6, wherein the contact portions (109a, 109b) of the bearing (109) support the spindle at both sides of the conveyance roller (108).

8. A recording apparatus according to any preceding claim, wherein the respective pair of contact portions (109a, 109b; 116a, 116b) is in a plane.

9. A recording apparatus according to claim 2 and any appendant claim, wherein the contact portions (109a, 109b) of the bearing (109) and the contact portions (116a, 116b) of the chassis (116) are located on the same line passing through the center of the conveyance roller (108).


**Patentansprüche**

1. Aufzeichnungsgerät, mit:

   einer Transportwalze (108);
   einer angetriebenen Walze (111), die sich angetrieben von der Transportwalze (108) dreht;
   einer Presseinrichtung (112) zum Pressen der angetriebenen Walze (111) gegen die Transportwalze (108);
   einem Lager (109) zum Tragen der Transportwalze (108);
   einem Chassis (116) zum Tragen des Lagers (109); und
   einer Antriebseinrichtung (107, 107, 110) zum Drehen der Transportwalze (108),

   **dadurch gekennzeichnet, dass**
   das Lager (109) ein Paar mit dem Umfang der Transportwalze (108) in Kontakt befindlicher Kontaktabschnitte (109a, 109b) zum Tragen der Transportwalze (108) hat, wobei die Positionen der Kontaktabschnitte (109a, 109b) derart festgelegt sind, dass die zu einem die Kontaktabschnitte (109a, 109b) verbindenden Liniensegment senkrechte Richtung innerhalb eines Bereichs von Vektorrichtungen ($\theta v$) der Ausübungskraft (Fv) liegt, welche die Transportwalze (108) zum Zeitpunkt eines Halts und eines Betriebs der Transportwalze (108) auf das Lager (109) ausübt.

2. Aufzeichnungsgerät nach Anspruch 1, bei dem das Chassis (116) ein Paar mit dem Umfang des Lagers (109) in Kontakt befindlicher Kontaktabschnitte (116a, 116b) zum Tragen des Lagers (109) hat, wobei die Positionen der Kontaktabschnitte (116a, 116b) des Chassis (116) derart festgelegt sind, dass die zu einem die Kontaktabschnitte (116a, 116b) des Chassis (116) verbindenden Liniensegment senkrechte Richtung innerhalb eines Bereichs von Vektorrichtungen ($\theta v$) einer Ausübungskraft (Fv) liegt, welche die Transportwalze (108) zum Zeitpunkt eines Halts und eines Betriebs der Transportwalze (108) auf das Lager (109) ausübt.

3. Aufzeichnungsgerät nach Anspruch 1 oder 2, bei dem die zu dem die beiden jeweiligen Kontaktabschnitte (109a, 109b; 116a, 116b) verbindenden Liniensegment senkrechte Richtung mit einer zusammengefassten Vektorrichtung (θv) der beiden Vektoren (Fv0, Fv1) übereinstimmt, die am jeweiligen Extrem im Änderungsbereich der Vektorrichtung (θv) der Ausübungskraft (Fv) vorliegen, oder sich näher an der Vektorrichtung (θv0) der Ausübungskraft (Fv0) zum Zeitpunkt des Halts der Transportwalze (108) befindet als die zusammengefasste Vektorrichtung (θt).

4.  Aufzeichnungsgerät nach einem der Ansprüche 1 bis 3, bei dem die Transportwalze (108) eine Welle hat und die Kontaktabschnitte (109a, 109b) des Lagers (109) den Umfang der Welle tragen.

5.  Aufzeichnungsgerät nach Anspruch 4, bei dem der Durchmesser der Welle gleich dem Durchmesser der Transportwalze (108) ist.

6.  Aufzeichnungsgerät nach Anspruch 4, bei dem der Durchmesser der Welle kleiner als der Durchmesser der Transportwalze (108) ist.

7.  Aufzeichnungsgerät nach einem der Ansprüche 4 bis 6, bei dem die Kontaktabschnitte (109a, 109b) des Lagers (109) die Welle an beiden Seiten der Transportwalze (108) tragen.

8.  Aufzeichnungsgerät nach einem der vorstehenden Ansprüche, bei dem sich die beiden jeweiligen Kontaktabschnitte (109a, 109b; 116a, 116b) in einer Ebene befinden.

9.  Aufzeichnungsgerät nach Anspruch 2 und jedem dazugehörigen Anspruch, bei dem sich die Kontaktabschnitte (109a, 109b) des Lagers (109) und die Kontaktabschnitte (116a, 116b) des Chassis (116) auf der gleichen, durch die Mitte der Transportwalze (108) gehenden Linie befinden.

**Revendications**

1.  Appareil d'enregistrement, comprenant :

    un rouleau d'acheminement (108) ;
    un rouleau entraîné (111), qui tourne lorsqu'il est entraîné par le rouleau d'acheminement (108) ;
    un moyen presseur (112) prévu pour presser le rouleau entraîné (111) vers le rouleau d'acheminement (108) ;
    un palier (109) pour soutenir le rouleau d'acheminement (108) ;
    un châssis (116) pour soutenir le palier (109) ; et
    des moyens d'entraînement (107, 107, 110) pour faire tourner le rouleau d'acheminement (108),

    **caractérisé en ce que**
    le palier (109) comprend une paire de parties de contact (109a, 109b), qui sont en contact avec la circonférence du rouleau d'acheminement (108) afin de soutenir le rouleau d'acheminement (108), les positions des parties de contact (109a, 109b) étant déterminées de telle manière qu'une direction, perpendiculaire à un segment de droite reliant les parties de contact (109a, 109b), soit située dans une plage de directions vectorielles (θv) de la force de sollicitation (Fv) que le rouleau d'acheminement (108) exerce sur le palier (109) au moment de l'arrêt et de l'actionnement du rouleau d'acheminement (108).

2.  Appareil d'enregistrement selon la revendication 1, dans lequel le châssis (116) comprend une paire de parties de contact (116a, 116b), qui viennent en contact avec la circonférence du palier (109) afin de soutenir le palier (109), les positions des parties de contact (116a, 116b) du châssis (116) étant déterminées de telle manière qu'une direction, perpendiculaire à un segment de droite reliant les parties de contact (116a, 116b) du châssis (116), soit située dans une plage de directions vectorielles (θv) de la force de sollicitation (Fv) que le rouleau d'acheminement (108) exerce sur le palier (109) au moment de l'arrêt et de l'actionnement du rouleau d'acheminement (108).

3.  Appareil d'enregistrement selon la revendication 1 ou 2, dans lequel la direction perpendiculaire au segment de droite reliant la paire respective de parties de contact (109a, 109b ; 116a, 116b) coïncide avec une direction vectorielle combinée (θt) des deux vecteurs (Fv0, Fv1) existant au niveau de chaque extrémité de la plage de variation de la direction vectorielle (θv) de la force de sollicitation (Fv), ou est située plus près de la direction vectorielle (θv0) de la force de sollicitation (Fv0) au moment de l'arrêt du rouleau d'acheminement (108) que la direction vectorielle combinée (θt).

4.  Appareil d'enregistrement selon l'une quelconque des revendications 1 à 3, dans lequel le rouleau d'acheminement (108) comporte un arbre, et les parties de contact (109a, 109b) du palier (109) soutiennent la circonférence de l'arbre.

5.  Appareil d'enregistrement selon la revendication 4, dans lequel le diamètre de l'arbre est égal au diamètre du rouleau d'acheminement (108).

6.  Appareil d'enregistrement selon la revendication 4, dans lequel le diamètre de l'arbre est inférieur au diamètre du rouleau d'acheminement (108).

7.  Appareil d'enregistrement selon l'une quelconque des revendications 4 à 6, dans lequel les parties de contact (109a, 109b) du palier (109) soutiennent l'arbre au niveau des deux côtés du rouleau d'acheminement (108).

8.  Appareil d'enregistrement selon l'une quelconque des revendications précédentes, dans lequel la paire respective de parties de contact (109a, 109b ; 116a, 116b) est située dans un plan.

9.  Appareil d'enregistrement selon la revendication 2 et l'une quelconque des revendications dépendant de celle-ci, dans lequel les parties de contact (109a, 109b) du palier (109) et les parties de contact (116a, 116b) du châssis (116) sont situées sur la même droite passant par le centre du rouleau d'acheminement (108).

FIG.1

# FIG.2

# FIG.3

# FIG.4

# FIG.5

# FIG.6

FIG.7

# FIG.8

## FIG.9

# FIG.10